# EUROPEAN PATENT SPECIFICATION

(11) **EP 2 933 053 B1**
(45) Date of publication and mention of the grant of the patent: **05.04.2017**
(21) Application number: 15163415.1
(22) Date of filing: 13.04.2015
(51) Int. Cl.: B23K 37/053

(54) **PIPE COUPLER**
VORRICHTUNG ZUR ROHRKUPPLUNG
DISPOSITIF POUR CONNECTER DES TUBES

(30) Priority: 14.04.2014 IT PC20140009
(43) Date of publication of application: 21.10.2015
(73) Proprietor: XCOUPLERS S.r.l., 29122 Piacenza (IT)
(72) Inventor: BADALOTTI, Ivan, 43011 Busseto (PARMA) (IT); LORETI, Sergio, 29121 Piacenza (IT)
(74) Representative: Fanzini, Valeriano

(56) References cited:
- US-A- 3 422 519
- US-A- 4 153 194

## Description

The present invention relates to a pipe coupler and in particular a coupler used to seam weld two ends of two cylindrical pipes, as known from US-A-3 422 519.

The invention can be used particularly in the production field of medium and large sized pipelines, such as oil pipelines, gas pipelines or the like.

These pipelines are typically assembled at the construction site, joining various tubular sections arranged aligned with one another along the edge of a trench by welding.

The join between one end of a section of pipe and the adjacent section takes place by seam welding the two ends of the two pipes.

For this purpose, the two ends of the pipes are held in position, against each other, by special devices named "couplers".

At times the end edge of the pipes may not be perfectly circular, due to typical tolerances of the manufacturing processes of these medium and large sized elements.

For this reason, besides acting as constraining means for preventing the ends from separating, coupling devices are also configured to align the end edges of the two pipes along a circular profile that substantially coincides with the nominal diameter of the pipe.

These couplers are generally divided into two different types, internal couplers and external couplers. The invention relates in particular to the second type.

Known external couplers generally comprise a pair of semi-circular jaws that are clamped around the pipes over the joining area. On the jaws there are arranged a plurality of gauge blocks adapted to contact the outer surface of the pipes, constraining the two ends of the pipes along their axis.

These blocks are arranged along two circular rows, each acting at the end of each pipe.

Each of these gauge blocks is also provided with a screw, or a bolt, arranged radially with respect to the axis of the pipe and passing through the block so as to be able to contact the outer surface thereof.

During the coupling step that precedes welding, the two ends of the pipes are moved into contact with each other and enclosed between the jaws of the coupler.

Subsequently, the screws of the various gauge blocks are clamped to a greater or lesser degree, so as to press against the surface of the pipes, elastically deforming their edges until they are perfectly aligned with each other.

At this point, an operator can seam weld the joining area, operating in specific spaces produced in the jaws.

However, these known couplers have many disadvantages.

In fact, the couplers described above can be fitted to pipes having a specific outer diameter as, when the jaws are clamped, the gauge blocks are arranged along a circumference with a diameter that must coincide with the outer diameter of the pipe.

For these reasons, when producing networks of pipelines, generally composed of portions of pipes of different dimensions, it is necessary to use a number of couplers equal to the number of the different diameters of pipes used.

In addition to the increased costs for the purchase, hire and/or storage of this equipment, there are also costs for transporting it to the construction sites.

Another disadvantage of these known couplers concerns the time required to prepare the pipes for welding.

In fact, the clamping step is performed manually by an operator, who must check alignment of the edges along the whole circumference of the pipes.

One more disadvantage is represented by the difficulty encountered by the operator carrying out seam welding in the limited spaces between the two jaws, above all in the lower part of the pipes, which are generally raised off the ground by only a few tens of centimeters.

In this context, the object of the present invention is to provide a pipe coupler that solves the problems of the prior art described above.

It is therefore an object of the present invention to produce a pipe coupler that allows a reduction in the time required to align the ends of two pipes to be welded.

Another object of the present invention is to produce a pipe coupler that can be used, efficiently, with pipes of different diameters.

A further object of the present invention is that of providing a pipe coupler that allows the welding operator to weld in simpler manner with respect to known systems.

These objects are achieved by a pipe coupler comprising a frame that defines an open housing in which the ends of two pipes to be welded are at least partially contained, and rolling means, facing each other in said housing to contact the outer surface of the pipes, configured to allow relative rotation between the frame and said pipes.

According to an aspect of the invention, the rolling means comprise at least one roller placed in proximity of the joining area of the two pipes, so as to contact the outer surfaces of both the pipes.

Advantageously, the outer surface of said roller is provided with thrust means adapted to exert, following rotation in contact with the surfaces of the pipes, two opposing forces, acting on the respective ends of the two pipes to hold them against each other.

The rolling means, which contact the outer surfaces of the pipes, have the task of aligning their end edges so that they can be joined by welding.

The aforesaid at least one roller also allows said end edges to be held facing and in contact with each other.

The open housing allows the coupler to be fitted rapidly and simply to the ends of the pipes, without manual operations by one or more operators.

Moreover, as the frame has a large free area, this allows an operator to seam weld the ends of the pipes as said frame is rotated around the pipes.

In an aspect of the invention, the thrust means comprise a first helical profile, produced on a first segment of the roller, with a first winding direction, and a second helical profile, produced on a second segment of the roller, with a second winding direction opposite the first.

These helical profiles, rotating on the outer surface of the pipes, generate, through the friction force between the crests of the profiles and said outer surfaces, two opposing forces directed along the axis of the pipes, each acting on one of the two ends.

According to a preferred variant, the helical profiles are made of metal, so as to ensure resistance to contact pressures that are generated with the surface of the pipes. Preferably, between the crests of said helical profiles there is interposed a spiral made of plastic or rubber material, adapted to contact the surface of the pipes.

This material, coming into contact with the outer surface of the pipes, allows the friction between the rollers and the surfaces of the pipes to be increased, increasing the intensity of the axial forces generated.

In a further aspect of the invention, between said first segment and said second segment of said at least one roller there is provided a projecting annular portion with two stop surfaces adapted to contact the respective edges of the ends of the pipes.

These surfaces thus define the exact distance between the pipes, which allows correct seam welding.

In a preferred variant, this annular portion has a substantially rectangular section having the two stop surfaces converging toward each other.

This variant can be used when the pipes have tapered or beveled end edges to create an annular seat adapted to contain the seam weld.

According to another preferred aspect of the invention, the rolling means comprise a plurality of rollers connected to the frame, directly or indirectly, so as to rotate about an axis parallel to the axis of the pipes.

According to the invention, some or all of these rollers can be provided with the thrust means described above.

In another aspect of the invention, at least one of said rollers is connected to motor means.

Said motor means allow relative rotation between the frame and the pipes. Advantageously, according to the invention the coupler can be used holding the pipes fixed and rotating the frame around them.

According to yet another aspect of the invention, the rolling means can be movable inside the housing. In this way, the coupler can be used to couple pipes of different diameters.

In a preferred variant, the frame comprises an arc-shaped structure with a substantially semi-circular inner edge. On one end of said arc-shaped structure there can be placed at least a first roller. Said roller can be connected, directly or indirectly, to the arc-shaped structure. At the opposite end of the arc-shaped structure there can be placed a first movable portion, connected to actuator means adapted to move it in the housing. At least a first pair of coupled rollers is supported in a rotating manner by said movable portion.

The movable portion allows the rollers to be carried from an idle position, in which the frame can be arranged around the pipes, to an operating position in which they contact the surfaces of the pipes.

According to another variant of the invention, on the frame there is placed a second movable portion, connected to actuator means adapted to move it in the housing. At least a second pair of rollers is supported in a rotating manner by said movable portion.

According to an aspect of the invention, the first, the second, or both movable portions can be connected directly to an actuator.

In another aspect of the invention, the movable portion is hinged on the arc-shaped structure or, alternatively, is hinged on an arm, in turn hinged on the arc-shaped structure, connected to actuator means.

According to another aspect of the invention, at least a first roller is provided with thrust means adapted to exert on the end of the two pipes two opposing forces, acting to hold them against each other when the relative rotation between the frame and the pipes takes place in a first rotation direction, and at least a second roller is provided with thrust means adapted to exert on the end of the two pipes two opposing forces, acting to hold them against each other when the relative rotation between the frame and the pipes takes place in a second rotation direction, opposite the first. The first roller or the second roller is selectively carried into contact with the pipes as a function of the rotation direction that is to be imparted to the frame.

In yet another aspect of the invention, the coupler is provided with a welding device applied to the frame and configured to seam weld the ends of the pipes during relative rotation between the frame and the pipes.

The coupler thus configured is therefore able to automatically position two pipes correctly and to join them by seam welding.

Further characteristics and advantages of the present invention will become more apparent from the description of an example of a preferred, but not exclusive, embodiment of a pipe coupler, as illustrated in the accompanying drawings, wherein:

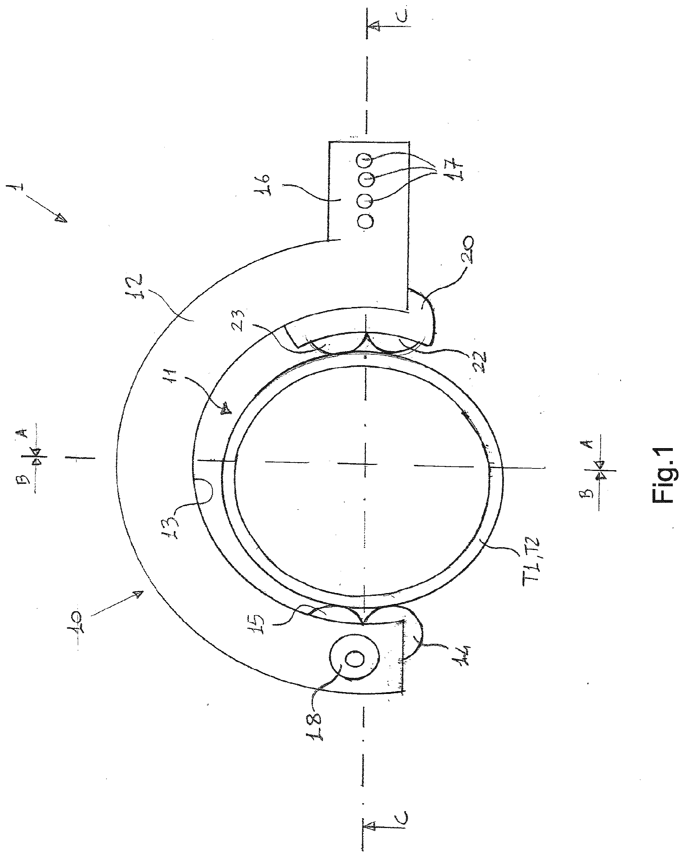

- Fig. 1 is a front view of the pipe coupler according to the invention, fitted to the ends of two pipes;

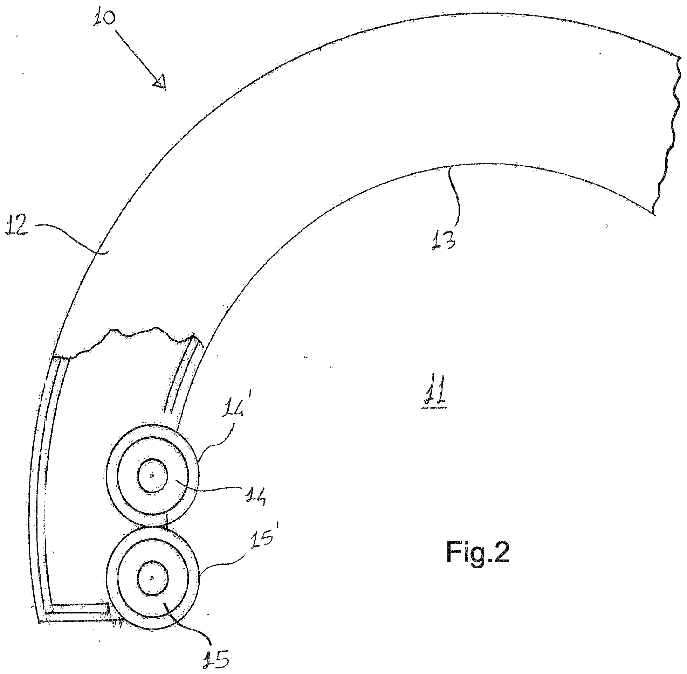

- Fig. 2 is a partly sectional front view of a part of the coupler according to the invention;

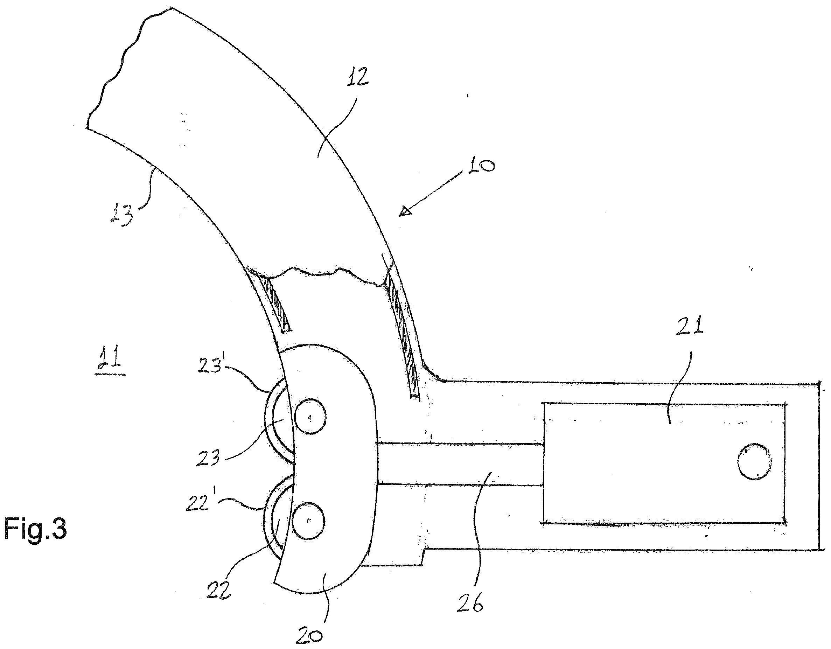

- Fig. 3 is a partly sectional front view of another part of the coupler according to the invention;

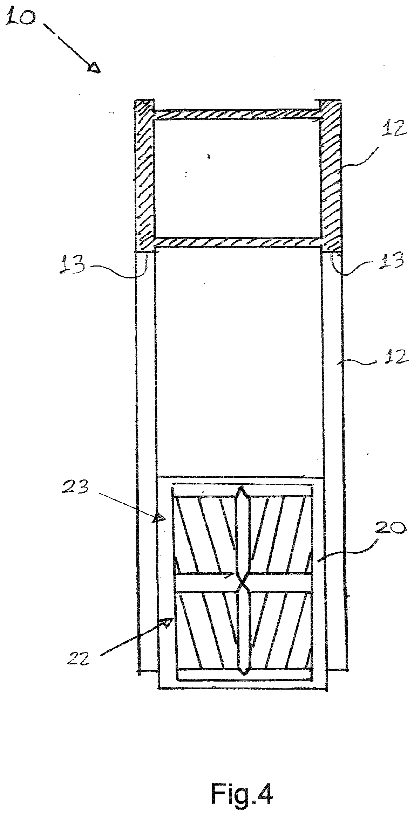

- Fig. 4 is a vertical section along a plane A-A of the coupler according to the invention;

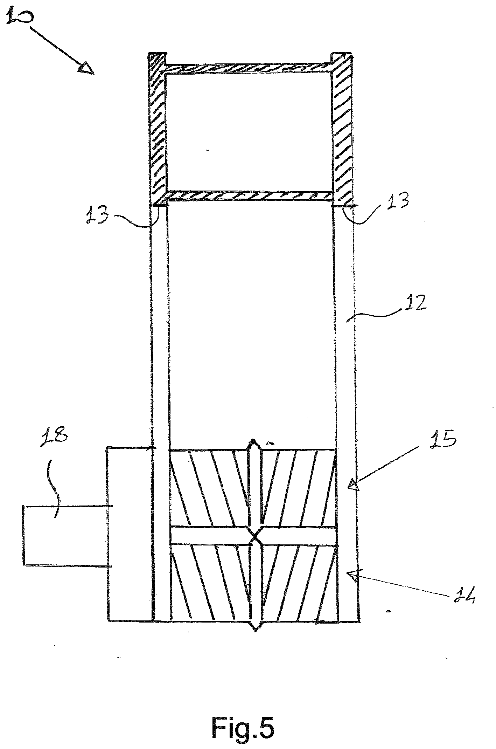

- Fig. 5 is a vertical section along a plane B-B of the coupler according to the invention;

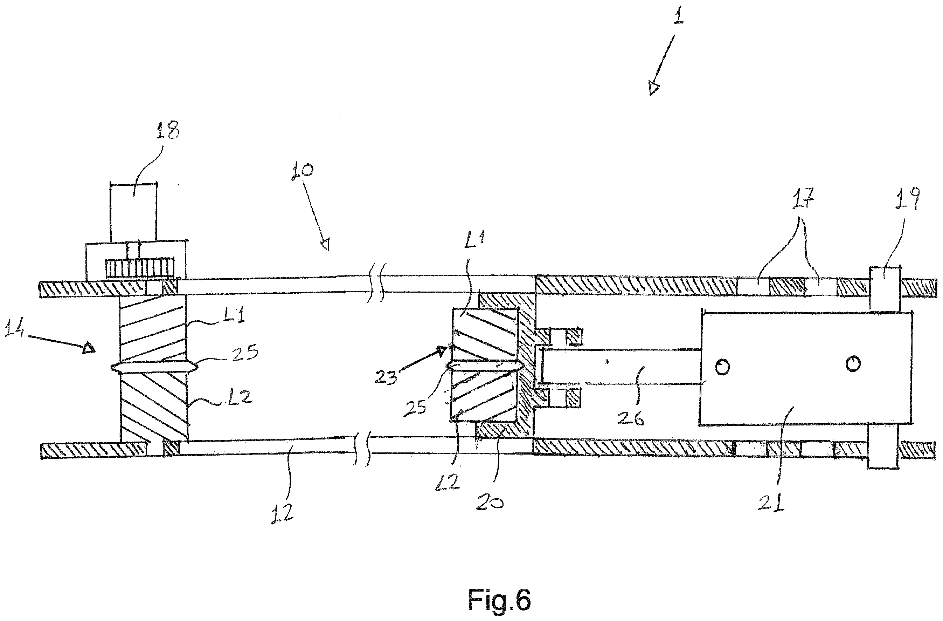

- Fig. 6 is a sectional view along a horizontal plane C-C of the coupler according to the invention;

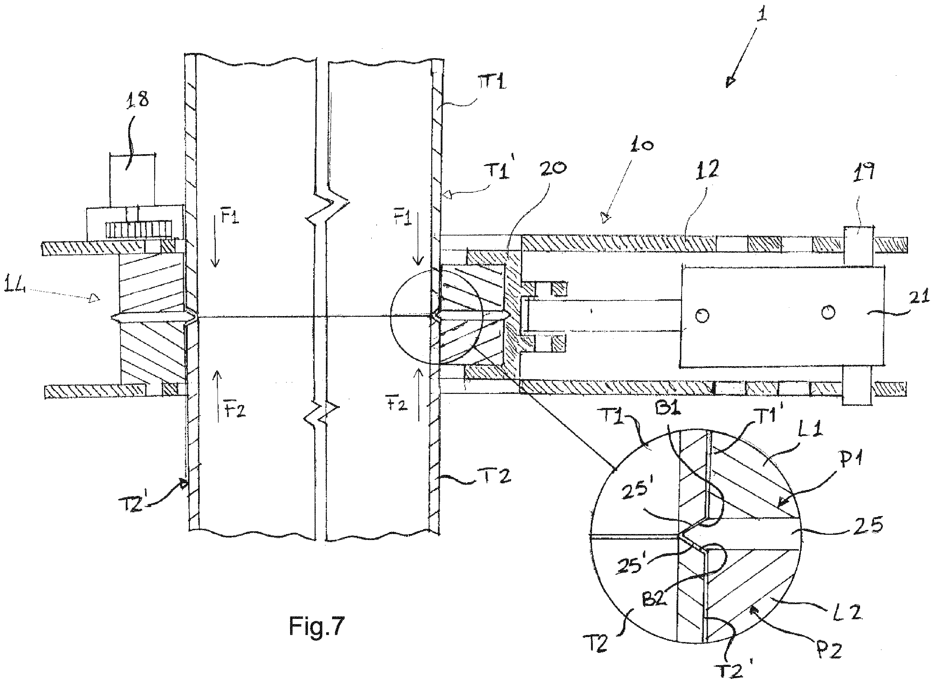

- Fig. 7 is the sectional view of Fig. 6 of the coupler fitted to two pipes to be welded;
- Fig. 8 is a view of a detail of the coupler according to the invention;
- Figs. 9 and 10 are respectively a front view and a side view of the pipe coupler according to another variant of the invention;
- Fig. 11 is a front view of the pipe coupler according to a further variant of the invention;
- Fig. 12 is a front view of the pipe coupler, according to a further variant of the invention.

With reference to the accompanying figures, the pipe coupler, indicated as a whole with 1, comprises a frame 10 structured to define an open housing 11, in which the ends of two pipes T1, T2, to be joined to each other by welding, are partly contained.

In the example illustrated, said frame 10 comprises, for example, an arc-shaped structure 12 with an inner edge 13 having a substantially semi-circular profile that partly surrounds the pipes T1, T2.

On this frame 10 and, more precisely, on the arc-shaped structure 12, there are provided rolling means, for example rollers, facing the housing 11 and configured to allow relative rotation between the frame 10 and the pipes T1, T2.

According to a preferred embodiment of the invention, these rollers are connected to the frame 10 so as to rotate each around an axis parallel to the axis of the pipes T1, T2.

In the example shown, the coupler comprises a first pair of rollers 14, 15 arranged along the inner edge 13 of the arc-shaped structure 12.

Said rollers 14, 15 are preferably coupled, i.e. side by side but with the respective surfaces not in contact.

More in detail, these rollers 14, 15 are mounted on the arc-shaped structure 12 so that their outer surface 14' and 15' projects beyond the inner edge 13 so as to come into contact with the outer surfaces T1' and T2' of pipes T1, T2 contained in the housing 11.

The coupler also comprises a second pair of coupled rollers 22, 23 projecting toward the housing 11.

According to the invention, this second pair of rollers 22, 23 is supported by a movable portion 20 connected to actuator means 21 adapted to move it inside the housing 11 toward or away from the first pair of rollers 14, 15.

By translating the movable portion 20 it is therefore possible to carry all the rollers 14, 15, 22, 23 into contact with the pipes T1, T2.

In this way, unlike known couplers, the coupler can be fitted to pipes with different outer diameters.

According to the invention, the outermost rollers 14 and 22 are arranged so that their distance measured on a circular arc, inside the housing, is greater than 180 °, for example at least 190 °.

In this way, when the rollers are clamped against the surface of the pipes, the frame cannot translate radially with respect thereto.

According to a preferred variant, the actuator means comprise a hydraulic cylinder 21 connected to the frame 10 provided with a rod 26 connected to the movable portion 20. Alternatively, the cylinder 21 can be connected to the movable portion and the rod 26 can be connected to the frame 10.

Preferably, the frame is provided with a flange 16 in which there are produced a plurality of seats 17 adapted to house a pin 19 that connects the hydraulic cylinder 21 to the frame.

By varying the position of the pin 19 in the various seats 17, it is possible to move the cylinder forward and backward, varying the maximum extension point of the cylinder in the housing 11 and therefore the range of diameters of pipes to which the coupler can be fitted.

According to the invention, at least one of said rollers 14, 15, 22, 23 is placed in proximity of the joining area of the two pipes T1, T2, so as to contact the outer surfaces of both.

In the example shown, all the rollers 14, 15, 22, 23 are placed over the joining area of the two pipes T1, T2.

According to the invention, at least one of these rollers comprises a first segment L1 and a second segment L2, between which there is interposed an annular projection 25.

This annular projection 25 is preferably placed along the centerline of the roller defining two segments L1 and L2 of the same length.

According to the invention, this annular projection is adapted to contact the end edges B1, B2 of the respective pipes T1, T2, when these are held against each other for welding.

Preferably, said annular portion 25 has a substantially triangular section, so as to define two inclined and converging stop surfaces 25'.

These inclined stop surfaces 25' are necessary when the end edges B1, B2 of the pipes have been tapered (operation commonly performed to allow correct seam welding).

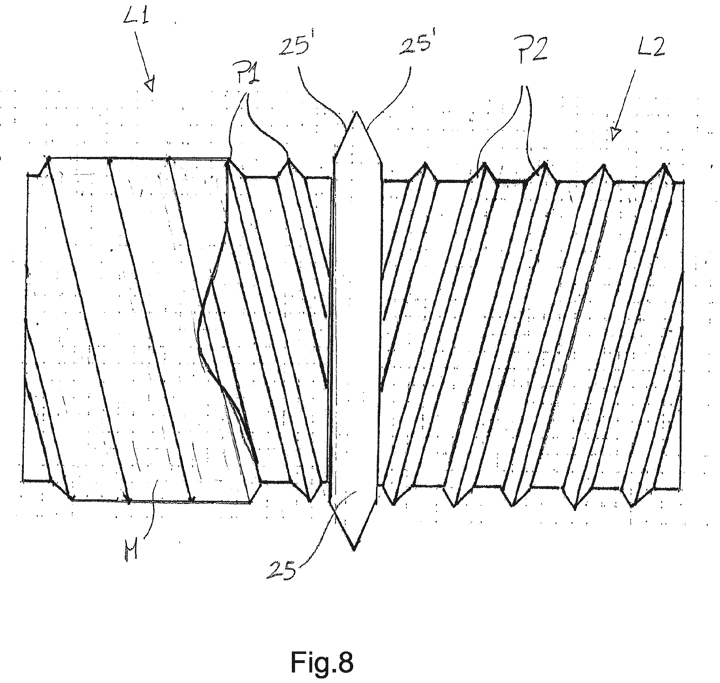

According to the invention, the first segment L1 has the outer surface provided with a first projecting helical profile P1 with a first winding direction and the second segment L2 having the outer surface provided with a second helical profile P2 with a second winding direction opposite the first (Fig. 8).

Each of the two segments L1 and L2 is configured to rotate in contact with the outer surface of a portion of pipe.

Following this rotation, the profiles P1, P2 generate, through friction between the crests and the surfaces of the pipes, two opposing forces F1, F2 parallel to the axis of the pipes and opposite each other that tend move the two pipes T1, T2 toward each other.

Preferably, said helical profiles P1, P2 are made of metal so as to be able to withstand the pressure with which the rollers are pressed by the actuator 21 against the outer surfaces of the pipes.

Between the crests of these profiles P1, P2 there is preferably interposed a spiral M, made of plastic or rubber material, that allows the friction force between the roller and the pipes, and therefore the intensity of the forces F1, F2 that hold the two pipes against each other, to be increased.

In the example shown, all the rollers 14, 15, 22, 23 have the structure described above.

According to the invention, at least one of the rollers is connected to motor means 18 adapted to generate the torque required to rotate the frame 10 around the two pipes T1, T2.

In a preferred embodiment, a hydraulic motor 18 is connected to the first pair of rollers 14, 15 mounted in a fixed manner on the arc-shaped structure 12.

Alternatively, other or all the rollers can be connected to motor means adapted to rotate them.

In order to use the coupler it, must simply be arranged around two portions of pipes so that these are contained in the housing 11.

Subsequently, the actuator 21 is operated to translate the movable portion 20 toward the inside of the housing so that the pipes T1, T2 are clamped between the two pairs of rollers 14, 15, 22, 23.

At this point, the hydraulic motor 18 is operated to rotate the rollers 14, 15 with respect to the surface of the pipes.

Rotation of these rollers causes the rotation of the frame 10 around the pipes T1, T2 and also the generation of the forces F1, F2 that hold the two ends thrust toward each other.

The welding operator can then seam weld the area in which the pipes are not surrounded by the frame 10 in a more convenient and simpler manner.

Clearly, the hydraulic motor 18 is provided with a control system to control the rotation speed of the frame with respect to the pipes T1, T2.

This rotation can take place continuously or discretely, at the convenience of the welding operator.

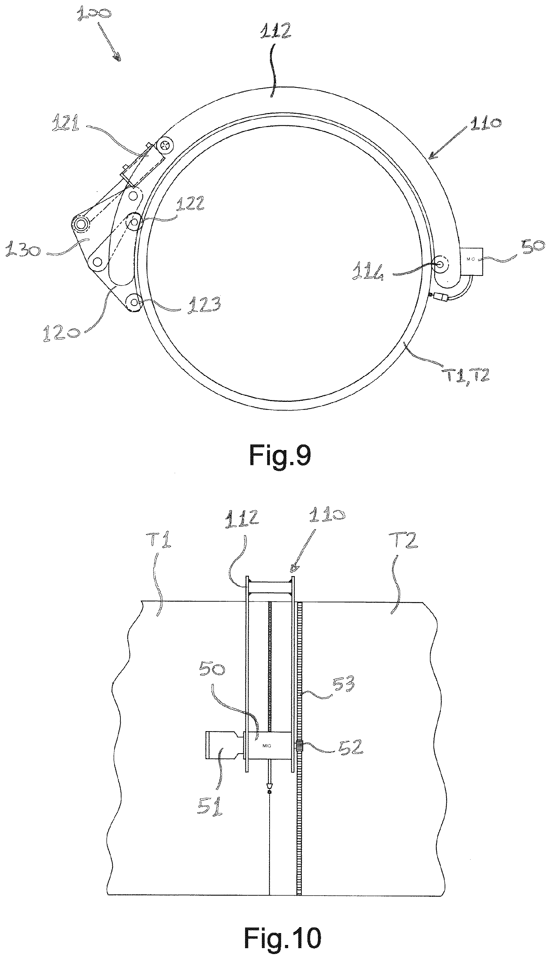

Figs. 9 and 10 show another variant of the coupler, indicated as a whole with 100.

According to this variant, at a first end of this arc-shaped structure there is hinged an arm 130 connected to an actuator 121. On the arm 130 there is hinged a first movable portion 120. The movable portion 120 can therefore swivel freely with respect to the arm 130.

On said first movable portion 120 there is supported a pair of rollers 122, 123.

The extension of the actuator 121 rotates the arm 130, which in turn moves the movable portion inside the housing to carry the rollers 122, 123 into contact with the surface of the pipes T1, T2.

On a second opposite end of the arc-shaped structure 112 there is placed a roller 114, the axis of which is fixed with respect to the arc-shaped structure 112.

At least one of the rollers 114, 122, 123 is motorized to rotate the frame.

On the frame 110 there is placed a welding device 50 adapted to seam weld the end edges of the pipes while the coupler is rotated about the axis of the pipes. This device is already known and will not be described in more detail.

Advantageously, the welding device 50 can be associated with guide means adapted to regulate the rotation speed of the frame, and therefore of the welding device, to obtain a seam weld that is as uniform as possible.

Said guide means comprise, for example, a gear wheel 52, connected to a motor 51, meshed with a crown wheel 53 fitted around the surface of one of the pipes.

The motor 51 can be a dedicated motor or the same motor that operates one of the rollers.

According to the invention, the welding device 50 can be applied to all variants of the coupler, even if not specifically shown in the figures.

Fig. 10 shows a further variant of the coupler in which, with respect to the variant of Fig. 9, at the second end of the arc-shaped structure 112 there is hinged a second arm 131 connected to an actuator 132.

On the second arm 131 there is hinged a second movable portion 133. On said second movable portion 133 there is supported a pair of rollers 114, 115.

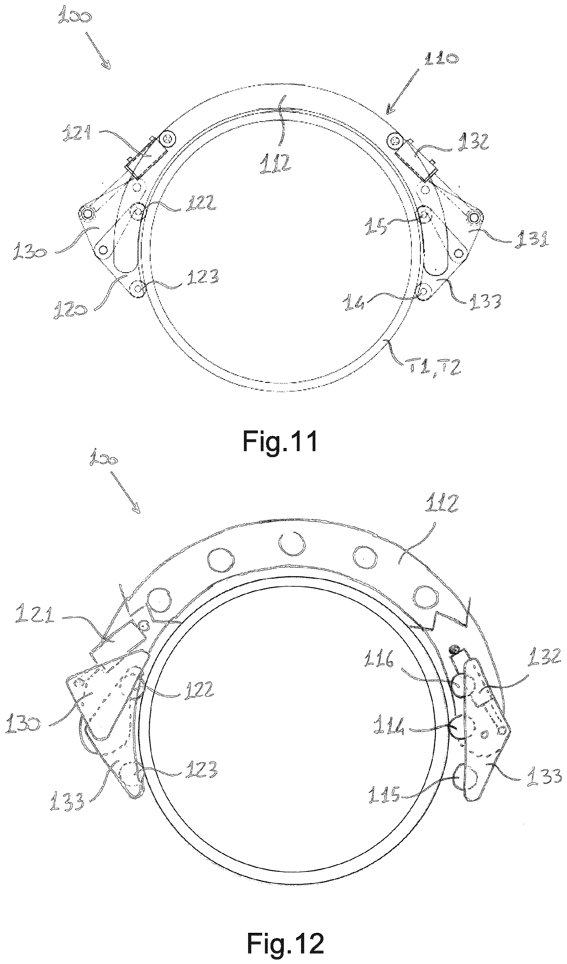

Fig. 11 shows another variant of the coupler, additional with respect to the variant of Fig. 9, in which also a second movable portion 133 is hinged to the second end of the arc-shaped structure 112. The second movable portion 133 is connected directly to an actuator 132.

On said second movable portion 133 there is hinged a pair of rollers 115, 116.

To carry the coupler to the operating condition, the actuator 121 moves the first movable portion until the rollers 122, 123, and subsequently the roller 114, are in contact with the pipes T1, T2.

The second movable portion 133 is instead swiveling so that one of the two rollers 115, 116 can be carried into contact with the surface of the pipes.

According to the invention, a first roller 115 is provided with thrust means adapted to exert on the end of the two pipes two opposing forces, acting to hold them against each other when the relative rotation between the frame and the pipes takes place in a first rotation direction R1.

Instead, the second roller 116 is provided with thrust means adapted to exert on the end of the two pipes these opposing forces when the relative rotation between the frame and the pipes takes place in a second rotation direction R2, opposite the first.

By carrying the first roller 115 or the second roller 116 into contact with the surface of the pipes, it is possible to rotate the frame 110 in both rotation directions, in any case obtaining the thrust effect on the ends of the pipes.

## Claims

1. A pipe coupler comprising a frame (10) defining an open housing (11) in which there are at least partially contained the ends of two pipes (T1, T2) to be welded and rolling means facing each other in said housing (11) to contact the outer surface of the pipes (T1, T2) and configured to allow relative rotation between the frame (10) and said pipes, **characterized in that** said rolling means comprise at least one roller placed in proximity of the joining area of the two pipes so as to contact the outer surfaces of both pipes (T1, T2), the outer surface of said roller being provided with thrust means adapted to exert, following rotation in contact with the surfaces of the pipes, two opposing forces (F1, F2), acting on the respective ends of the two pipes (T1, T2) to hold them against each other.

2. The pipe coupler according to claim 1, **characterized in that** said thrust means comprise a first helical profile (P1), produced on a first segment (L1) of the roller, with a first winding direction, and a second helical profile (P2) produced on a second segment (L2), with a second winding direction opposite the first.

3. The pipe coupler according to claim 2, **characterized in that** said helical profiles (P1, P2) are made of metal, between the crests of the helical profiles there being interposed a spiral (M), made of a plastic or rubber material, adapted to contact the surface of the pipes (T1, T2).

4. The pipe coupler according to claim 2 or 3, **characterized in that** between said first segment (L1) and said second segment (L2) of said at least one roller there is provided a projecting annular portion (25) with two stop surfaces (25') adapted to contact the respective edges (B1, B2) of the ends of the pipes (T1, T2).

5. The pipe coupler according to claim 4, **characterized in that** said annular portion (25) has a substantially triangular section having stop surfaces (25') converging toward each other.

6. The pipe coupler according to any one of the preceding claims, **characterized in that** said rolling means comprise rollers (14, 15, 22, 23, 114, 115, 116, 122, 123) connected to the frame (10), directly or indirectly, so as to rotate about an axis parallel to the axis of the pipes (T1, T2).

7. The pipe coupler according to claim 6, **characterized in that** least one of said rollers (14, 15, 22, 23, 114, 115, 116, 122, 123) is connected to motor means (18) to rotate the frame (10) with respect to the pipes (T1, T2).

8. The pipe coupler according to any one of the preceding claims, **characterized in that** said rolling means are provided movable inside the housing (11) so as to be able to couple pipes (T1, T2) of different diameters.

9. The pipe coupler according to any one of the preceding claims, **characterized in that** said frame (10) comprises an arc-shaped structure (12) with a substantially semi-circular inner edge (13), the coupler comprising:
- at least one roller (14, 15, 114, 115, 116) placed at a first end of said arc-shaped structure (12);
- at least a first movable portion (20, 120), placed at an opposite end of the arc-shaped structure (12);
- actuator means (21, 121) adapted to move the first movable portion (20) inside the housing (11);
- at least a first pair of coupled rollers (22, 23, 122, 123) supported in a rotating manner by said movable portion (20, 120);

10. The pipe coupler according to claim 9, **characterized in that** it comprises a second movable portion (133) connected to actuator means (132) adapted to move it in the housing (11), at least a second pair of rollers (14, 15, 114, 115, 116) being supported in a rotating manner by said second movable portion.

11. The pipe coupler according to one of claims 9 or 10, **characterized in that** said movable portion (20, 133) is connected directly to an actuator (21).

12. The pipe coupler according to any one of claims 9 to 11, **characterized in that** said movable portion (133) is hinged on the arc-shaped structure (112).

13. The pipe coupler according to any one of claims 9 or 10, **characterized in that** said movable portion is hinged on an arm (130, 131) connected to said actuator means (121, 132), said arm being hinged on the arc-shaped structure (112).

14. The pipe coupler according to claim 12, **characterized in that** at least a first roller (115) is provided with thrust means adapted to exert, on the end of the two pipes (T1, T2), two opposing forces (F1, F2), acting to hold them against each other when the relative rotation between the frame and the pipes takes place in a first rotation direction (R1), and at least a second roller (116) is provided with thrust means adapted to exert on the end of the two pipes (T1, T2) two opposing forces (F1, F2), acting to hold them against each other when the relative rotation between the frame and the pipes takes place in a second rotation direction (R2), opposite the first, said first roller and said second roller being selectively carried into contact with the pipes.

15. The pipe coupler according to any one of the preceding claims, **characterized in that** it comprises a welding device (50) fitted to the frame (10, 110) and configured to seam weld the ends of the pipes (T1, T2) during the relative rotation between the frame (10) and said pipes.

## Patentansprüche

1. Vorrichtung zur Rohrkupplung, umfassend einen Rahmen (10), definierend ein offenes Gehäuse (11), in dem mindestens teilweise die Enden von zwei zu verschweißenden Rohren (T1, T2) enthalten sind, und Rollmittel, die einander im Gehäuse (11) zugewandt sind, um die äußere Oberfläche der Rohre (T1, T2) zu berühren, und ausgelegt, um die relative Drehung zwischen dem Rahmen (10) und den Rohren zu erlauben, **dadurch gekennzeichnet, dass** die Rollmittel mindestens eine Walze umfassen, die in der Nähe des Verbindungsbereichs der zwei Rohre platziert ist, um die äußeren Oberflächen von beiden Rohren (T1, T2) zu berühren, wobei die äußere Oberfläche der Walze mit Druckmitteln versehen ist, die ausgelegt sind, um nach der Drehung in Kontakt mit den Oberflächen der Rohre zwei entgegenwirkende Kräfte (F1, F2) auszuüben, die auf die jeweiligen Enden der zwei Rohre (T1, T2) wirken, um diese gegeneinander zu halten.

2. Vorrichtung zur Rohrkupplung nach Anspruch 1, **dadurch gekennzeichnet, dass** die Druckmittel ein erstes schraubenförmiges Profil (P1) umfassen, das auf einem ersten Segment (L1) der Walze ausgebildet ist, mit einer ersten Wicklungsrichtung, und ein zweites schraubenförmiges Profil (P2), das auf einem zweiten Segment (L2) ausgebildet ist, mit einer zweiten Wicklungsrichtung, die der ersten entgegengesetzt ist.

3. Vorrichtung zur Rohrkupplung nach Anspruch 2, **dadurch gekennzeichnet, dass** die schraubenförmigen Profile (P1, P2) aus Metall bestehen, wobei zwischen den Scheiteln der schraubenförmigen Profile eine Spirale (M) eingesetzt ist, bestehend aus einem Kunststoff- oder Kautschukmaterial, ausgelegt, um die Oberfläche der Rohre (T1, T2) zu berühren.

4. Vorrichtung zur Rohrkupplung nach Anspruch 2 oder 3, **dadurch gekennzeichnet, dass** zwischen dem ersten Segment (L1) und dem zweiten Segment (L2) der mindestens einen Walze ein hervorstehender ringförmiger Abschnitt (25) mit zwei Anschlagsoberflächen (25') bereitgestellt ist, ausgelegt, um die jeweiligen Kanten (B1, B2) der Enden der Rohre (T1, T2) zu berühren.

5. Vorrichtung zur Rohrkupplung nach Anspruch 4, **dadurch gekennzeichnet, dass** der ringförmige Abschnitt (25) eine im Wesentlichen dreieckige Sektion besitzt, aufweisend Anschlagsoberflächen (25'), die zusammenlaufen.

6. Vorrichtung zur Rohrkupplung nach einem der vorhergehenden Ansprüche, **dadurch gekennzeichnet, dass** die Rollmittel Walzen (14, 15, 22, 23, 114, 115, 116, 122, 123) umfassen, die unmittelbar oder mittelbar an den Rahmen (10) angeschlossen sind, um sich um eine Achse zu drehen, die parallel zur Achse der Rohre (T1, T2) verläuft.

7. Vorrichtung zur Rohrkupplung nach Anspruch 6, **dadurch gekennzeichnet, dass** mindestens eine der Walzen (14, 15, 22, 23, 114, 115, 116, 122, 123) an Motormittel (18) angeschlossen ist, um den Rahmen (10) zu den Rohren (T1, T2) zu drehen.

8. Vorrichtung zur Rohrkupplung nach einem der vorhergehenden Ansprüche, **dadurch gekennzeichnet, dass** die Rollmittel bewegbar im Gehäuse (11) bereitgestellt sind, um in der Lage zu sein, Rohre (T1, T2) unterschiedlicher Durchmesser zu kuppeln.

9. Vorrichtung zur Rohrkupplung nach einem der vorhergehenden Ansprüche, **dadurch gekennzeichnet, dass** der Rahmen (10) eine bogenförmige Struktur (12) mit einer im Wesentlichen halbkreisförmigen Innenkante (13) umfasst, wobei die Vorrichtung zur Rohrkupplung umfasst:
- mindestens eine Walze (14, 15, 114, 115, 116), platziert an einem ersten Ende der bogenförmigen Struktur (12);
- mindestens einen ersten bewegbaren Abschnitt (20, 120), platziert an einem entgegengesetzten Ende der bogenförmigen Struktur (12);
- Betätigungsmittel (21, 121), ausgelegt, um den ersten bewegbaren Abschnitt (20) im Gehäuse (11) zu bewegen;
- mindestens ein erstes Paar gekuppelter Walzen (22, 23, 122, 123), getragen auf rotierende Weise vom bewegbaren Abschnitt (20, 120).

10. Vorrichtung zur Rohrkupplung nach Anspruch 9, **dadurch gekennzeichnet, dass** sie einen zweiten bewegbaren Abschnitt (133) umfasst, der an Betätigungsmittel (132) angeschlossen ist, ausgelegt, um im Gehäuse (11) bewegt zu werden, wobei mindestens ein zweites Paar Walzen (14, 15, 114, 115, 116) auf rotierende Weise vom zweiten bewegbaren Abschnitt getragen wird.

11. Vorrichtung zur Rohrkupplung nach Anspruch 9 oder 10, **dadurch gekennzeichnet, dass** der bewegbare Abschnitt (20, 133) direkt an ein Stellglied (21) angeschlossen ist.

12. Vorrichtung zur Rohrkupplung nach einem der Ansprüche 9 bis 11, **dadurch gekennzeichnet, dass** der bewegbare Abschnitt (133) gelenkig auf der bogenförmigen Struktur (112) befestigt ist.

13. Vorrichtung zur Rohrkupplung nach Anspruch 9 oder 10, **dadurch gekennzeichnet, dass** der bewegbare Abschnitt gelenkig auf einem Arm (130, 131) befestigt ist, angeschlossen an die Betätigungsmittel (121, 132), wobei der Arm gelenkig auf der bogenförmigen Struktur (112) befestigt ist.

14. Vorrichtung zur Rohrkupplung nach Anspruch 12, **dadurch gekennzeichnet, dass** mindestens eine erste Walze (115) mit Druckmitteln versehen ist, ausgelegt, um auf das Ende der zwei Rohre (T1, T2) zwei entgegenwirkende Kräfte (F1, F2) auszuüben, die wirken, um diese gegeneinander zu halten, wenn die relative Drehung zwischen dem Rahmen und den Rohren in einer ersten Rotationsrichtung (R1) stattfindet, und dass mindestens eine zweite Walze (116) mit Druckmitteln versehen ist, ausgelegt, um auf das Ende der zwei Rohre (T1, T2) zwei entgegenwirkende Kräfte (F1, F2) auszuüben, die wirken, um diese gegeneinander zu halten, wenn die relative Drehung zwischen dem Rahmen und den Rohren in einer zweiten Rotationsrichtung (R2) stattfindet, die der ersten entgegengesetzt ist, wobei die erste Walze und die zweite Walze selektiv mit den Rohren in Berührung gebracht werden.

15. Vorrichtung zur Rohrkupplung nach einem der vorhergehenden Ansprüche, **dadurch gekennzeichnet, dass** sie eine Schweißvorrichtung (50) umfasst, die am Rahmen (10, 110) angebracht und ausgelegt ist, um die Enden der Rohre (T1, T2) während der relativen Drehung zwischen dem Rahmen (10) und den Rohren mit Schweißnähten zu verbinden.

## Revendications

1. Dispositif pour connecter des tubes comprenant un châssis (10) définissant un logement ouvert (11) dans lequel se trouvent au moins partiellement contenues les extrémités de deux tubes (T1, T2) à souder et des moyens de roulement se faisant face dans ledit logement (11) pour se mettre en contact avec la surface extérieure des tubes (T1, T2) et configurés pour permettre une rotation correspondante entre le châssis (10) et lesdits tubes, **caractérisé en ce que** lesdits moyens de roulement comprennent au moins un rouleau placé à proximité de la zone de jonction des deux tubes de manière à se mettre en contact avec les surfaces extérieures des deux tubes (T1, T2), la surface extérieure dudit rouleau étant pourvue de moyens de poussée pouvant exercer, suite à la rotation en contact avec les surfaces des tubes, deux forces opposées (F1, F2) agissant sur les extrémités respectives des deux tubes (T1, T2) pour les maintenir l'un contre l'autre.

2. Dispositif pour connecter des tubes selon la revendication 1, **caractérisé en ce que** lesdits moyens de poussée comprennent un premier profil hélicoïdal (P1), produit sur un premier segment (L1) du rouleau, avec une première direction d'enroulement, et un second profil hélicoïdal (P2), produit sur un second segment (L2), avec une seconde direction d'enroulement opposée à la première.

3. Dispositif pour connecter des tubes selon la revendication 2, **caractérisé en ce que** lesdits profils hélicoïdaux (P1, P2) sont en métal, entre les crêtes des profils hélicoïdaux se trouve interposée une spirale (M) en plastique ou en caoutchouc pouvant se mettre en contact avec la surface des tubes (T1, T2).

4. Dispositif pour connecter des tubes selon la revendication 2 ou 3, **caractérisé en ce que** entre ledit premier segment (L1) et ledit second segment (L2) dudit au moins un rouleau est prévu une partie annulaire en saillie (25) dotée de deux surfaces d'arrêt (25') pouvant se mettre en contact avec les bords respectifs (B1, B2) des extrémités des tubes (T1, T2).

5. Dispositif pour connecter des tubes selon la revendication 4, **caractérisé en ce que** ladite partie annulaire (25) comporte une section substantiellement triangulaire comportant des surfaces d'arrêt (25') convergeant les unes vers les autres.

6. Dispositif pour connecter des tubes selon l'une quelconque des revendications précédentes, **caractérisé en ce que** lesdits moyens de roulement comprennent des rouleaux (14, 15, 22, 23, 114, 115, 116, 122, 123) reliés au châssis (10), directement ou indirectement, de manière à tourner autour d'un axe parallèle à l'axe des tubes (T1, T2).

7. Dispositif pour connecter des tubes selon la revendication 6, **caractérisé en ce qu'**au moins un desdits rouleaux (14, 15, 22, 23, 114, 115, 116, 122, 123) est relié à des moyens motorisés (18) pour faire tourner le châssis (10) par rapport aux tubes (T1, T2).

8. Dispositif pour connecter des tubes selon l'une quelconque des revendications précédentes, **caractérisé en ce que** lesdits moyens de roulement sont prévus mobiles à l'intérieur du logement (11) de sorte à pouvoir accoupler des tubes (T1, T2) de diamètres différents.

9. Dispositif pour connecter des tubes selon l'une quelconque des revendications précédentes, **caractérisé en ce que** ledit châssis (10) comprend une structure arquée (12) dotée d'un bord interne substantiellement semi-circulaire (13), le dispositif pour connecter comprenant :
- au moins un rouleau (14, 15, 114, 115, 116) placé à une première extrémité de ladite structure arquée (12) ;
- au moins une première partie mobile (20, 120) placée à une extrémité opposée de la structure arquée (12) ;
- des moyens actionneurs (21, 121) pouvant déplacer la première partie mobile (20) à l'intérieur du logement (11) ;
- au moins une première paire de rouleaux accouplés (22, 23, 122, 123) supportés de façon rotative par ladite partie mobile (20, 120).

10. Dispositif pour connecter des tubes selon la revendication 9, **caractérisé en ce qu'**il comprend une seconde partie mobile (133) reliée aux moyens actionneurs (132) adaptés pour la déplacer dans le logement (11), au moins une seconde paire de rouleaux (14, 15, 114, 115, 116) étant supportés de façon rotative par ladite seconde partie mobile.

11. Dispositif pour connecter des tubes selon l'une des revendications 9 ou 10, **caractérisé en ce que** ladite partie mobile (20, 133) est reliée directement à un actionneur (21).

12. Dispositif pour connecter des tubes selon l'une quelconque des revendications de 9 à 11, **caractérisé en ce que** ladite partie mobile (133) est monté articulée sur la structure arquée (112).

13. Dispositif pour connecter des tubes selon l'une quelconque des revendications 9 ou 10, **caractérisé en ce que** ladite partie mobile est montée articulée sur un bras (130, 131) relié auxdits moyens actionneurs (121, 132), ledit bras étant monté articulé sur la structure arquée (112).

14. Dispositif pour connecter des tubes selon la revendication 12, **caractérisé en ce qu'**au moins un premier rouleau (115) est pourvu de moyens de poussée pouvant exercer, sur l'extrémité des deux tubes (T1, T2), deux forces opposées (F1, F2) agissant pour les maintenir l'un contre l'autre lorsque la rotation correspondante entre le châssis et les tubes a lieu dans une première direction de rotation (R1), et au moins un second rouleau (116) est pourvu de moyens de poussée pouvant exercer sur l'extrémité des deux tubes (T1, T2) deux forces opposées (F1, F2) agissant pour les maintenir l'un contre l'autre lorsque la rotation correspondante entre le châssis et les tubes a lieu dans une seconde direction de rotation (R2), opposée à la première, ledit premier rouleau et ledit second rouleau étant sélectivement mis en contact avec les tubes.

15. Dispositif pour connecter des tubes selon l'une quelconque des revendications précédentes, **caractérisé en ce qu'**il comprend un dispositif de soudage (50) monté sur le châssis (10, 110) et configuré pour souder en continu les extrémités des tubes (T1, T2) lors de la rotation correspondante entre le châssis (10) et lesdits tubes.
